# EUROPEAN PATENT SPECIFICATION

(11) **EP 1 084 054 B1**
(45) Date of publication and mention of the grant of the patent: **29.09.2004**
(21) Application number: 99901107.5
(22) Date of filing: 19.01.1999
(51) Int. Cl.: B62D 9/00

(54) **Passenger vehicle with twin tyres having a unique rim and rear steering wheels**
Personenfahrzeug mit einteiliger Felge für Zwillingsbereifung und hinten gelenkten Rädern
Voiture avec roues jumelées à jante unique, avec roues arrières directrices

(30) Priority: 20.01.1998 IT RM980032
(43) Date of publication of application: 21.03.2001
(73) Proprietor: Vigano', Giorgio, 00198 Roma (IT)
(72) Inventor: Vigano', Giorgio, 00198 Roma (IT)
(86) International application number: PCT/IT1999/000006
(87) International publication number: WO 1999/036305

(56) References cited:
- DE-A- 2 451 314
- FR-A- 2 354 232
- FR-A- 2 720 984

## Description

The present Invention has, as objective, notable technical innovations on the vehicles for transporting people and else, in general, and, in particular, on those that are circulating in very crowded urban and suburban areas.
The Invention is particularly suitable for small vehicles, two to three meters long.

### BACKGROUND ART

Up to now the vehicles for transportation on road have had the front wheels steering ; while the back wheels, only seldom, have been given an extremely limited steering function, only complementary to the main one, performed by the front wheels.

Although this traditional approach be of universal application, it has some negative aspects:
° In the front part of the traditional vehicles, the space is very limited; the room necessary for turning the steering tyres increases considerably with the increas ing of the tyres' diameter and of the steering angle; Therefore in order to leave the necessary space for the engine and other mechanical parts, as well as to the passengers' legs, it is in the practice to reduce the potential steering angle. -This choice reduces considerably, not only the parking ability, but also the possibility of turning with short radius in narrow places even at low speed. -This negative characteristic is more evident on small vehicles (the ones more suitable to town), because, normally they are also narrower and, therefore, they offer less space to allow safe steering on sharp bends.
° For the same reasons of limited existing space, the tyres' diameters are constrained which makes the vehicles more sensible to the roughness of the road, that is thus more suffered by the passengers.
° In order to reduce the shaking due to the smaller diameter of the front wheels, it is the use to soften the suspensions; thus decreasing the road holding.

A known vehicle from DE 24 51 314 A, represents the closest prior art according to claim 1. It discloses two large non steering front wheels and two smaller rear steering wheels. Another vehicle with two large front wheels and two small rear wheels having a smaller axle width than the front wheels is known from US 5 480 275 A.

### DISCLOSURE OF INVENTION

The innovations that are the object of this Invention, have the scope of overcoming the above mentioned negative points and to make much more functional, safe and agile the vehicles for town and surroundings.

This scope is achieved by the features of the independent claim 1. Herein the front wheels are composed by two independent tyres, placed side by side at a suitable distance, and fitted on a unique support (rim) that has separate grooves for each tyre. Additional features are determined by dependent claims 2 and 3.

The vehicle is provided with front wheels that are non steering, while the back ones are steering.

N.B.: by "non steering front wheels" are meant also the ones with very limited steering functions, in any case, with a steering angle lower than the one of the back wheels.

The front wheels can be much bigger, because "not beeng steering" they take, in any case, a very limited room in the volume of the vehicle. -Therfore they offer more comfort, in spite of the fact that the suspensions can be rather stiff and therefore more safe.

Additionally the steering back wheels can have a diameter smaller than the front wheels. -This fact makes it possible to increase the steering angle of the back wheels, beyond 70° (seventy degrees) by each side, i.e.: more than 140° in total.

The vehicles front wheels are more determinant for the road-holding in case of puncture or tyre burst - but, eventually, also the back wheels, can be siamese, i.e.: each wheel composed by two indipendent tyres, fitted on a unique support (rim).

### DESCRIPTION OF THE INVENTION with the help of attached drawings.

The above is more evident and can be better explained with the help of the drawings reported on the attachement.

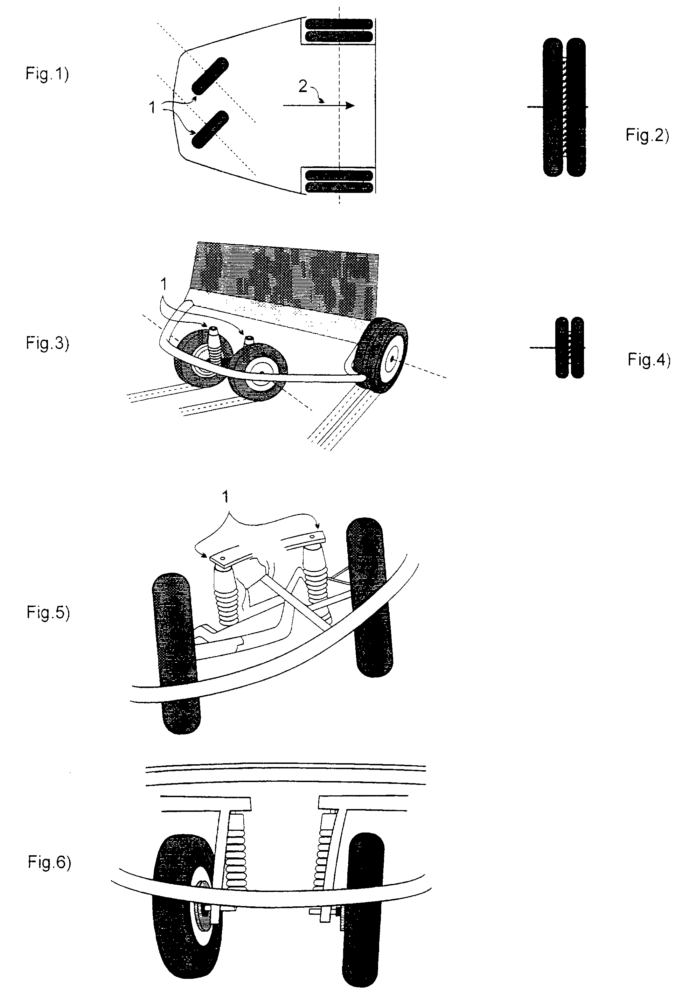

Fig. 1) at (1) shows the steering back wheels, while the arrow (2) shows the forward direction of the vehicle. -The back wheels diame ter can be equal or different as compared with the one of the front wheels; but, in the drawing is shown an example with smaller diameter, as this solution anables to achieve bigger steering angles.

The type of back suspensions is uninfluent: Fig. 3) & 5) at (1) show suspensions comparable to the ones of cars; but, they can be similar to the ones of motorcycles or a mix; Fig. 6); The back wheels can have one only tyre, as shown at Fig. 1), 3), 5) & 6) or have siamese-tyres-wheels of the type shown at Fig. 4).

Fig. 2) shows the outline of a siamese wheel of big dimensions, as front fitted in Fig. 1) & 3). -The whole wheel is composed by two inch pendent tyres - with or without tube - placed side by side, at a suitable distance; said tyres are fitted on a unique support (rim) that has separate grooves, for each tyre.

Theese wheels, when are used in the front of the vehicle as "non steering" give the following advantages:
° They take up a very reduced space as compared with traditional front steering wheels: this goes to the advantage of the interior available room and of the facility to enter into it.
° They provide more comfort on bad or country roads, thanks to their larger diameter.
° In case of tyre burst or puncture, they avoid the skidding of the vehicle and consent to reach destination, without stopping and without the help of a spare tyre.
   This is a big advantage, comparing with the traditional steering front wheels that, in case of a sudden flat tyre, can cause disasters.
° The road holding, due to the front siamese wheels and back steering, is highly increased on any type of road, even wet or snowed.
° In case of strong rain, the siamese wheels have a very high anti aquaplaning effect, due to the presence of the two tyres on each wheel.

## Claims

1. Small Vehicle for road transportation of people and/or baggage and/or goods, including two non steering front wheels and two steering rear wheels, **characterized by** the fact that each of said front wheels are composed by two independent tyres fitted on a unique support.

2. Vehicle according to Claim 1, **characterised in that** it has at least 6 tyres running on six independent trajectories.

3. Vehicle according to Claim, 1 **characterised in that** the rear wheels have a global steering angle of 140 degrees.

## Patentansprüche

1. Kleines Fahrzeug für Strassentransport von Personen und/oder Gepäck und/oder Waren, das zwei nicht lenkbare Vorderräder und zwei lenkbare Hinterräder aufweist, **dadurch gekennzeichnet, dass** jedes der beiden Hinterräder aus zwei unabhängigen Reifen besteht, die von einem einzigen Gestell getragen, werden.

2. Fahrzeug nach Anspruch 1, **dadurch gekennzeichnet, dass** es wenigstens sechs Reifen aufweist, die sich auf sechs unabhängigen Bahnen bewegen.

3. Fahrzeug nach Anspruch 1, **dadurch gekennzeichnet, dass** die Hinterräder einen gesamten Lenkwinkel von 140° aufweisen.

## Revendications

1. Petit véhicule pour le transport routier des personnes et/ou bagages et/ou marchandises, comprenant deux roues antérieures, qui ne sont pas directrices, et deux roues postérieures directrices, **caractérisé par le fait que** chacune des roues antérieures est composée par deux pneumatiques indépendants montés sur un seul support.

2. Véhicule selon la revendication 1, **caractérisé par le fait qu'**il est composé au moins par six pneumatiques, qui tournent selon six trajectoires indépendantes.

3. Véhicule selon la revendication 1, **caractérisé par le fait que** les roues antérieures forment un angle de direction global de 140 degrés.
